# FASCICULE DE BREVET EUROPEEN

(11) **EP 0 456 566 B1**
(45) Date de publication et mention de la délivrance du brevet: **27.09.1995**
(21) Numéro de dépôt: 91401180.4
(22) Date de dépôt: 06.05.1991
(51) Int. Cl.: C22B 19/16, C22B 9/02, B01D 3/16

(54) **Plateau pour colonne à distiller, colonne à distiller comportant de tels plateaux et utilisation d'une telle colonne**
Platte für Distillationskolonne, Distillationskolonne mit einer derartigen Platte und Anwendung einer derartigen Kolonne
Plate for distillation column, distillation column containing such a plate and use of such a column

(30) Priorité: 07.05.1990 FR 9005716
(43) Date de publication de la demande: 13.11.1991
(73) Titulaire: METALEUROP S.A., F-94126 Fontenay-sous-Bois Cédex (FR); HEPWORTH REFRACTORIES (BELGIUM) S.A., B-7330 Saint Ghislain (BE)
(72) Inventeur: Kollar, Richard, F-59500 Douai (FR); Maurage, Robert, c/o Hepworth Refractories S.A., B-7330 Saint-Ghislain (BE)
(74) Mandataire: Martin, Jean-Jacques

(56) Documents cités:
- FR-A- 1 528 358
- FR-A- 2 243 263

## Description

La présente invention concerne un plateau pour colonne à distiller du type "à plateaux", comprenant un fond percé d'un trou de passage, et un rebord entourant ledit fond et présentant au moins un flanc extérieur. Elle concerne également une colonne à distiller du type "à plateaux" comportant de tels plateaux, ainsi qu'une utilisation d'une telle colonne.

L'invention trouve une application particulièrement avantageuse en métallurgie dans le domaine de la distillation des métaux, notamment du zinc.

Actuellement, les plateaux pour colonne à distiller, conformes au préambule, utilisés en métallurgie pour distiller les métaux, sont généralement de forme rectangulaire, le rebord entourant le fond du plateau présentant alors quatre flancs extérieurs plans. Par ailleurs, les trous de passage sont, le plus souvent, aménagés dans une partie latérale du fond des plateaux. De cette manière, lorsque, dans une colonne à distiller, les plateaux sont empilés les uns au-dessus des autres, de façon à disposer en quinconce lesdits trous de passage, les parties de fond non percées se comportent comme des chicanes qui augmentent les échanges thermiques de la vapeur montante et du liquide qui redescend. Ce type de colonne à distiller est connu sous le nom de "New Jersey".

Lorsqu'il s'agit de distiller des métaux dont la température d'ébullition est élevée, 907°C pour le zinc par exemple, la chambre de chauffe chargée de vaporiser le métal, ou plus précisément le mélange dans lequel le métal à distiller est engagé, doit fournir une énorme quantité d'énergie calorifique qui tend à accroître le prix de revient du métal ainsi distillé. Aussi a-t-on cherché à augmenter le rapport production/coût énergétique de telles colonnes à distiller.

Dans un premier temps, la tendance a été d'améliorer la capacité de production des unités de distillation pour une consommation d'énergie donnée. Dans ce but, on a, par exemple, utilisé des colonnes et des plateaux de plus grandes dimensions associés à des chambres de chauffe accolées. Mais cette solution avait l'inconvénient de diminuer le volume des chambres de chauffe. Puis, à la suite de l'augmentation brutale du prix des produits pétroliers, le souci des industriels a été surtout de diminuer la quantité de combustible consommée, parallèlement aux efforts faits pour améliorer les rendements énergétiques.

Aussi, le problème technique à résoudre par l'objet de la présente invention est de proposer un plateau pour colonne à distiller, conforme au préambule, qui permettrait d'obtenir une même production de métal distillé pour une consommation d'énergie réduite dans des proportions notables.

La solution au problème technique posé consiste, selon la présente invention, en ce que le flanc extérieur présente, par rapport à sa forme générale rectangulaire, au moins un relief relatif.

Par rapport aux flancs extérieurs plans des plateaux connus de l'état de la technique, la présence d'au moins un relief relatif dans le plateau, objet de l'invention, a pour effet de modifier, en l'améliorant, le couplage entre le plateau et le flux thermique produit par la chambre de chauffe. Le relief relatif augmente en effet la surface de transfert calorifique, ce qui accroît les échanges par conduction. D'autre part, du fait des perturbations provoquées par ledit relief relatif, le transfert thermique par convexion se trouve augmenté car la couche limite qui freine ce transfert est plus faible. La légère diminution du couplage par rayonnement résultant de la diminution de la lame rayonnante comprise entre le plateau et la paroi intérieure de la colonne est largement compensée par le gain réalisé sur la conduction et la convexion.

Dans un mode de réalisation particulier de l'invention dans lequel ledit flanc extérieur présente une pluralité de reliefs relatifs régulièrement répartis le long dudit rebord, il est prévu que lesdits reliefs relatifs sont des ondulations.

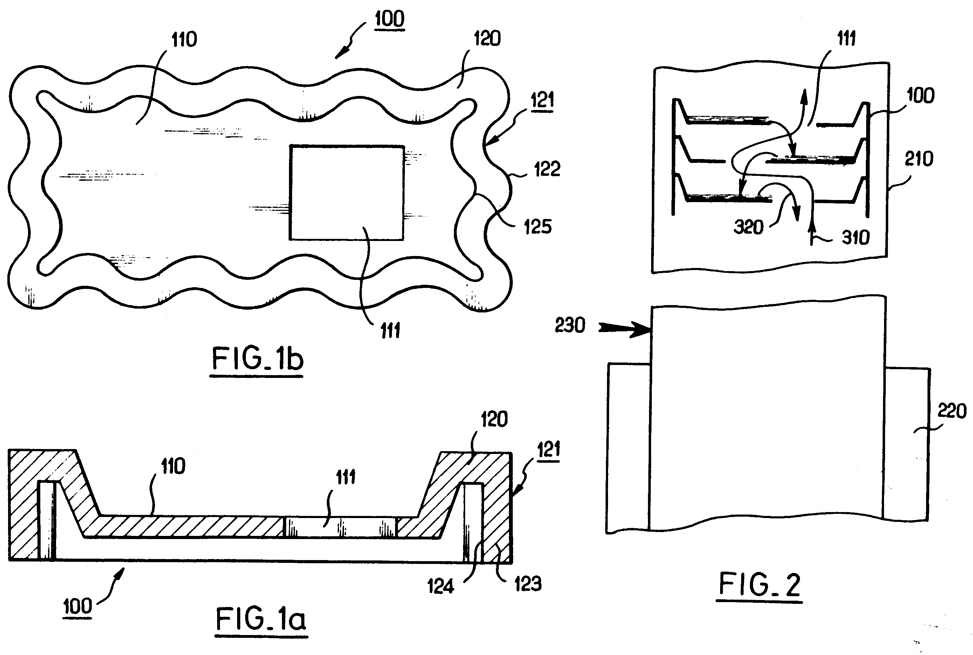

D'autres caractéristiques et avantages de l'invention seront donnés en détails dans la description qui va suivre en regard des dessins annexés, donnés à titre d'exemples non limitatifs, dans lesquels :
. la figure 1a est une vue en coupe d'un plateau pour colonne à distiller, conforme à l'invention,
. la figure 1b est une vue de dessous de la coupe de la figure 1a,
. la figure 2 est une vue schématique en coupe d'une colonne à distiller selon l'invention.

Les figures 1a et 1b montrent, respectivement en coupe et en vue de dessous, un plateau 100 pour une colonne à distiller du type "à plateaux", par exemple une colonne à distiller un métal tel que le zinc. Le plateau 100 comprend un fond 110 percé d'un trou 111 de passage permettant à la vapeur métallique appauvrie en impuretés de circuler vers le haut de la colonne et au liquide plus riche en impuretés de redescendre vers les plateaux inférieurs avant d'être à nouveau vaporisé. Le trou 111 de passage est situé dans une partie latérale du fond 110. D'autre part, un rebord 120 entoure ledit fond 110 et présente un flanc extérieur 121. Comme le montre les figures 1a et 1b, le flanc extérieur 121 comporte une pluralité de reliefs relatifs 122 régulièrement répartis le long du rebord 120. Dans l'exemple de la figure 1b, les reliefs relatifs 122 constituent, de façon non limitative, des ondulations. Plus précisément, lesdites ondulations sont composées d'arcs de cercle successivement concaves et convexes.

On peut voir également à la figure la que ledit rebord a sensiblement la forme d'un U renversé et que la branche extérieure 123 de l'U par rapport au plateau présente, d'une part, le flanc extérieur 121 et, d'autre part, un flanc intérieur 124 comportant des creux relatifs 125 situés en regard desdits reliefs relatifs.

Dans une application métallurgique où les températures atteintes peuvent être très élevées, le matériau constituant le plateau 100 doit être réfractaire. Mais il y a avantage à ce qu'il présente une certaine conductibilitée thermique de manière à assurer un contact thermique par conduction entre la chambre de chauffe de la colonne à distiller et le mélange métallique en cours de distillation. Le carborandum, ou carbure de silicium Sic, est un matériau bien adapté à ce type d'application.

La figure 2 montre, partiellement, en coupe une colonne à distiller du type "à plateaux", destinée à distiller le zinc et comportant une pluralité de plateaux 100 empilés les uns au-dessus des autres de façon à ce que les trous 111 de passage soient disposés en quinconce. Du fait de la position latérale des trous 111 de passage, les trajets de la vapeur 310 et du liquide 320 se trouvent rallongés d'où un meilleur contact thermique des fluides au sein de la colonne. La quantité de chaleur nécessaire au fonctionnement de la colonne à distiller est fournie par une chambre de chauffe 220 dont le couplage avec les plateaux 100 de la colonne est nettement amélioré par les ondulations du rebord des plateaux. Les Demanderesses ont évalué que le gain en énergie résultant de l'invention pouvait atteindre 15 %.

Le zinc avec ses impuretés, de cadmium notamment, est injecté dans la colonne au niveau d'un orifice 230. Les vapeurs montantes s'appauvrissent en masse et en impuretés, tandis que le liquide descendant voit sa teneur en cadmium et autres augmentée. Le zinc purifié est recueilli en haut de la colonne, tandis qu'un alliage riche en cadmium se forme dans la partie basse.

## Revendications

1. Plateau (100) pour colonne à distiller du type "à plateaux", comprenant un fond (110) percé d'un trou (111) de passage, et un rebord (120) entourant ledit fond (110) et présentant au moins un flanc extérieur (121) de forme générale rectangulaire, caractérisé en ce que ledit flanc extérieur (121) présente, par rapport à cette forme générale rectangulaire, au moins un relief relatif (122).

2. Plateau selon la revendication 1, caractérisé en ce que ledit flanc extérieur présente, par rapport à sa forme générale rectangulaire, une pluralité de reliefs relatifs régulièrement répartis.

3. Plateau selon la revendication 2, caractérisé en ce que les reliefs relatifs que présente le flanc extérieur par rapport à sa forme générale rectangulaire sont des ondulations.

4. Plateau selon la revendication 3, caractérisé en ce que lesdites ondulations sont composées d'arcs de cercles successivement concaves et convexes.

5. Plateau selon l'une quelconque des revendications 1 à 4, caractérisé en ce que, ledit rebord (120) ayant sensiblement une forme d'un U renversé, la branche extérieure (123) de l'U par rapport au plateau présente, d'une part, ledit flanc extérieur (121), et, d'autre part, un flanc intérieur (124) comportant au moins un creux relatif (125) situé en regard dudit relief relatif (122).

6. Plateau selon l'une quelconque des revendications 1 à 5, caractérisé en ce qu'il est réalisé en un matériau réfractaire présentant une conductibilité thermique.

7. Plateau selon la revendication 6, caractérisé en ce que ledit matériau est du carborandum.

8. Colonne à distiller du type "à plateaux", caractérisé en ce qu'elle comporte une pluralité de plateaux (100) selon l'une quelconque des revendications 1 à 7, et dont les trous (111) de passage sont situés dans une partie latérale du fond (110), et en ce que lesdits plateaux sont empilés les uns au-dessus des autres de façon à disposer en quinconce lesdits trous (111) de passage.

9. Utilisation à la distillation du zinc d'une colonne à distiller selon la revendication 8 comportant des plateaux selon la revendication 7.

## Claims

1. A tray (100) for a "tray" type distillation column, the tray comprising a bottom (110) pierced by a through hole (111), and a rim (120) surrounding said bottom (110) and having at least one outside flank (121) of generally rectangular shape, the tray being characterized in that said outside flank (121) has at least one relative projection (122), projecting from said generally rectangular shape.

2. A tray according to claim 1, characterized in that said outside flank has a plurality of regularly spaced apart relative projections projecting from its generally rectangular shape.

3. A tray according to claim 2, characterized in that the relative projections, projecting from the generally rectangular shape of the outside flank, are undulations.

4. A tray according to claim 3, characterized in that said undulations are made up of successive concave and convex circular arcs.

5. A tray according to any one of claims 1 to 4, characterized in that said rim (120) is substantially in the form of an upsidedown U-shape, with the branch (123) of the U-shape on the outside relative to the tray having both said outside flank (121) and an inside flank (124) including at least one relative indentation (125) level with said relative projection (122).

6. A tray according to any one of claims 1 to 5, characterized in that it is made of a refractory material having good thermal conductivity.

7. A tray according to claim 6, characterized in that said material is Carborundum.

8. A "tray" type distillation column, characterized in that it comprises a plurality of trays (100) according to any one of claims 1 to 7, with the through holes (111) thereof being situated in laterally offset portions of their bottoms (110), and with said trays being stacked on one another in such a manner as to dispose said through holes (111) in a zigzag configuration.

9. The use of the distillation column of claim 8 including trays according to claim 7 in the distillation of zinc.

## Patentansprüche

1. Platte (100) für eine Destillationskolonne des Typs "mit Platten", mit einem Boden (110), der von einem Durchgangsloch (111) durchsetzt ist, und einer Randleiste (120), die den Boden (110) umgibt und wenigstens eine Außenflanke (121) allgemein rechtwinkliger Form zeigt, dadurch gekennzeichnet, daß die Außenflanke (121), in bezug auf diese allgemein rechtwinklige Form, wenigstens ein relatives Relief (122) zeigt.

2. Platte nach Anspruch 1, dadurch gekennzeichnet, daß die Außenflanke, in bezug auf ihre allgemein rechtwinklige Form, eine Vielzahl relativer Reliefs zeigt, die regelmäßig verteilt sind.

3. Platte nach Anspruch 2, dadurch gekennzeichnet, daß die relativen Reliefs, die die Außenflanke in bezug auf ihre allgemein rechtwinklige Form zeigt, Wellenlinien sind.

4. Platte nach Anspruch 3, dadurch gekennzeichnet, daß die Wellenlinien aus aufeinanderfolgenden konkaven und konvexen Kreisbögen zusammengesetzt sind.

5. Platte nach einem der Ansprüche 1 bis 4, dadurch gekennzeichnet, daß die Randleiste (120) im wesentlichen eine Form eines umgekehrten U hat, wobei das äußere Bein (123) des U in bezug auf die Platte einerseits die Außenflanke (121) und andererseits eine Innenflanke (124) aufweist, die wenigstens eine relative Vertiefung (25) enthält, die gegenüber dem relativen Relief (122) liegt.

6. Platte nach einem der Ansprüche 1 bis 5, dadurch gekennzeichnet, daß sie aus einem feuerfesten Material hergestellt ist, das eine thermische Leitfähigkeit zeigt.

7. Platte nach Anspruch 6, dadurch gekennzeichnet, daß das Material Karborund ist.

8. Destillationskolonne des Typs "mit Platten", dadurch gekennzeichnet, daß sie eine Vielzahl von Platten (100) nach einem der Ansprüche 1 bis 7 aufweist, deren Durchgangslöcher (111) in einem Seitenteil des Bodens (110) angeordnet sind, und daß die Platten aufeinander gestapelt sind, derart, daß die Durchgangslöcher (111) im Zickzack angeordnet sind.

9. Verwendung einer Destillationskolonne nach Anspruch 8 mit Platten nach Anspruch 7 für die Destillation von Zink.
